(19) Europäisches Patentamt
European Patent Office
Office européen des brevets

(11) **EP 3 237 990 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **15825911.9**

(22) Anmeldetag: **23.12.2015**

(51) Int Cl.:
*G06F 1/12* (2006.01)     *G06F 1/14* (2006.01)
*G06F 1/32* (2019.01)     *H04J 3/06* (2006.01)

(86) Internationale Anmeldenummer:
**PCT/AT2015/050329**

(87) Internationale Veröffentlichungsnummer:
**WO 2016/100999 (30.06.2016 Gazette 2016/26)**

(54) **VERFAHREN UND VORRICHTUNG ZUR ENERGIESPARENDEN EXTERNEN SYNCHRONISATION DER UHREN IN EINEM VERTEILTEN ECHTZEITCOMPUTERSYSTEM**

METHOD AND DEVICE FOR ENERGY-SAVING EXTERNAL SYNCHRONIZATION OF CLOCKS IN A DISTRIBUTED REAL-TIME COMPUTER SYSTEM

PROCÉDÉ ET DISPOSITIF POUR UNE SYNCHRONISATION EXTERNE, ÉCONOME EN ÉNERGIE, DES HORLOGES DANS UN SYSTÈME INFORMATIQUE EN TEMPS RÉEL DISTRIBUÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014 AT 509452014**

(43) Veröffentlichungstag der Anmeldung:
**01.11.2017 Patentblatt 2017/44**

(73) Patentinhaber: **TTTech Computertechnik AG 1040 Wien (AT)**

(72) Erfinder:
• **KOPETZ, Hermann
2500 Baden (AT)**
• **POLEDNA, Stefan
3400 Klosterneuburg (AT)**

(74) Vertreter: **Patentanwaltskanzlei Matschnig & Forsthuber OG Biberstraße 22 Postfach 36 1010 Wien (AT)**

(56) Entgegenhaltungen:
**WO-A1-2014/083340     US-A1- 2010 177 600**

EP 3 237 990 B1

**Beschreibung**

Die Erfindung betrifft ein Verfahren zur energiesparenden Realisierung einer globalen Zeitbasis in einem verteilten Echtzeitcomputersystem, welches eine Vielzahl von Knotenrechnern umfasst, wobei jeder Knotenrechner über eine lokale Uhr verfügt und Zugriff auf eine externe Referenzzeit mit einem Genauigkeitsfehler einer externen Zeitmessung hat.

Ein solches Verfahren ist in der US 2010/177600 A1 beschrieben.

Weiters betrifft die Erfindung eine Vorrichtung zur periodischen Erzeugung einer global synchronisierten Zeitnachricht.

Außerdem betrifft die Erfindung ein verteiltes Echtzeitcomputersystem, welches eine Vielzahl von Knotenrechnern umfasst, wobei jeder Knotenrechner über eine lokale Uhr verfügt und Zugriff auf eine externe Referenzzeit mit der Genauigkeit einer externen Zeitmessung $A^{ref}$ hat.

Die vorliegende Erfindung liegt im Bereich der Computertechnik. Sie beschreibt ein innovatives Verfahren, wie in einem verteilten zeitgesteuerten Echtzeitsystem die Uhren der Knotenrechner mit geringem Energieaufwand auf eine externe Zeitreferenz synchronisiert werden können.

In vielen technischen Verfahren werden Messgrößen erfasst, die sich zeitlich ändern. Die Messung einer sich zeitlich ändernden Messgröße ist nur vollständig, wenn zusätzlich zur Messgröße der Zeitpunkt der Datenerfassung systemweit interpretiert werden kann. In einem verteilten Computersystem, in dem eine Vielzahl von Knotenrechnern die Messwerte erfassen, müssen daher die lokalen Uhren der Knotenrechner regelmäßig synchronisiert werden, um eine systemweite globale Zeitbasis geforderter Granularität zur Verfügung zu haben.

In vielen technischen Anwendungen werden drahtlose Sensoren, die ihre Energie aus einer Batterie beziehen, eingesetzt. In batteriebetriebenen Geräten ist es erforderlich, energiesparende Techniken einzusetzen, um die Lebensdauer einer Batterie zu verlängern. Die vorliegende Erfindung legt ein innovatives Verfahren zur energiesparenden externen Synchronisation der Uhren eines verteilten Echtzeitsystems offen.

Die *Granularität* einer digitalen Zeitbasis bestimmt, welche Dauer zwischen zwei aufeinanderfolgenden Ticks der globalen Zeit vergeht. Wir bezeichnen das Intervall zwischen zwei aufeinanderfolgenden Ticks einer digitalen Uhr als *Zeitkorn* (eng. *time granule*). Da es prinzipiell nicht möglich ist, die Ticks von zwei autonomen Uhren vollständig zu synchronisieren, können sich die Zeitstempel eines einzigen Ereignisses, das von zwei unabhängigen Uhren beobachtet wird, um einen Tick unterscheiden. Um sicher zu stellen, dass sich die Zeitstempel eines einzigen Ereignisses, das von zwei beliebigen Uhren eines synchronisierten Uhrenensembles beobachtet wird, immer nur um maximal einen Tick unterscheiden, muss die *Reasonableness Condition* [4, p.58] erfüllt sein. Die *Reasonableness Condition* besagt dass die Granularität der globalen Zeitbasis größer sein muss als die *Präzision* der Uhren. Die *Präzision* (engl. *precision*) eines Uhrenensembles entspricht dem längsten Zeitintervall, während dessen alle sich entsprechenden Ticks eines Uhrenensembles stattfinden [4, p.55].

Man unterscheidet zwischen der *internen* und *externen* Synchronisation eines Ensembles von Uhren. Bei der *internen Synchronisation* synchronisieren sich die Uhren untereinander. Bei der *externen Synchronisation* synchronisiert sich jede Uhr des Ensembles unabhängig von jeder anderen Uhr auf eine *externe Referenzzeit.* Ein Beispiel für eine externe Referenzzeit ist die Zeit, die von einem Satellitennavigationssystem, z.B. GPS [1-3], weltweit verteilt wird.

Die vorliegende Erfindung befasst sich mit der externen Synchronisation der Uhren eines verteilten Echtzeitcomputersystems.

Die Qualität einer externen Synchronisation wird durch die Angabe der *Genauigkeit A* (engl. *accuracy*) festgehalten. Die Genauigkeit A gibt an, welches maximale Zeitintervall zwischen einem Tick der externen Referenzzeit und dem entsprechenden Tick der extern synchronisierten Uhr vergehen darf. Wenn zwei Uhren eines Ensembles mit einer Genauigkeit A mit der Referenzzeit synchronisiert sind, so ist die Präzision dieser beiden Uhren 2A [4, p. 55], da im Extremfall die lokale Zeit in der einen Uhr um A sec schneller und in der anderen Uhr um A sec langsamer voranschreitet als die Referenzzeit.

Die erforderliche Granularität der globalen Zeit in einem verteilten Echtzeitsystem wird durch die Dynamik der zu beobachtenden und steuernden technischen Prozesse bestimmt und ist im Rahmen der Systemanalyse vorzugeben.

Die vorgegebene Granularität der globalen Zeit, die Ungenauigkeit der Referenzzeiterfassung und die Stabilität des Oszillators der lokalen Uhr bestimmen, wie oft eine Uhr mit der externen Zeitreferenz zu synchronisieren ist. In diesem Zusammenhang ist der Begriff des *Holdoverintervalls* (HOI) von besonderer Bedeutung. Das HOI gibt an, wie lange eine lokale Uhr *frei,* d.h. ohne Synchronisation, *laufen* kann, ehe die *Reasonableness Condition* [4, p.58] verletzt wird.

Spätestens am Ende des HOI muss die lokale Uhr mit der externen Zeitreferenz synchronisiert werden, um die *Reasonableness Condition* einzuhalten. Während die Leistungsaufnahme einer frei laufenden Uhr sehr gering ist, ist der Energieaufwand, der zur Synchronisation mit der externen Referenzzeit, z.B. der GPS Zeit, erforderlich ist, relativ hoch [1-3].

Es ist eine Aufgabe der vorliegenden Erfindung, das HOI möglichst lang zu halten, damit die Synchronisation mit der externen Zeitreferenz nur selten erforderlich ist. Durch die dynamische Festlegung der Länge des HOI, basierend auf einer periodischen Beobachtung der Umweltbedingungen des Oszillators, wird das Ziel der Energieeinsparung erreicht.

Diese Aufgabe wird mit einem eingangs erwähnten Verfahren sowie einem eingangs erwähnten verteilten Echtzeitsystem dadurch gelöst, dass erfindungsgemäß ausgehend von einer geforderten Granularität $G^{glo}$ der globalen Zeitbasis und der gegebenen spezifizierten Granularität $g^{spec}$ der lokalen Uhr eines Knotenrechners ein maximales Offsetintervall $O^{max}$ des Ticks der lokalen Uhr des Knotenrechners bezogen auf den entsprechenden Tick der globale Zeit zum Endzeitpunkt eines *Holdoverintervalls* HOI nach

$$O^{max} = (f^s \cdot G^{glo}/2 - A^{ref} - 2\ g^{spec}\ )$$

bestimmt wird, wobei $f^s$ ein Sicherheitsfaktor ist, und wobei anschließend in einer Initialisierungsphase mit einer spezifizierten worst-case Driftrate $DR^{wc}$ nach

$$HOI = O^{max} / DR^{wc}$$

ein erstes HOI mit

$$N^{pl} = HOI / g^{spec}$$

der Anzahl der geplanten Ticks $N^{pl}$ der lokalen Uhr und mit der anfänglichen Granularität

$$g^{vor} = g^{spec}$$

im ersten HOI festgelegt wird, und wobei der Beginnzeitpunkt $t^B$ des ersten HOI auf der externen Zeitbasis gemessen wird, und wobei anschließend zyklisch am Ende eines **HOI** der Endzeitpunkt $t^E$ des soeben abgelaufenen **HOI** auf der externen Zeitbasis gemessen wird, wobei der Endzeitpunkt $t^E$ eines **HOI** gleichzeitig den Beginnzeitpunkt $t^B$ des folgenden HOI darstellt, und wo während des **HOI** die Anzahl der Ticks $N^{gez}$ der lokalen Uhr gezählt wird, und wobei nach Ende eines **HOI** nach

$$g^d = (t^E - t^B) / N^{gez}$$

die *durchschnittliche Granularität* $g^d$ der lokalen Uhr im unmittelbar vergangen HOI bestimmt wird, wobei $N^{gez}$ die gezählte Anzahl der Ticks im unmittelbar vergangen HOI angibt, und wobei diese durchschnittliche Granularität als anfängliche Granularität des laufenden HOI gesetzt wird, und wobei nach

$$N^{pl} = O^{max} / (g^d - g^{vor})$$

die Anzahl der anfänglich geplanten Ticks $N^{pl}$ der lokalen Uhr im laufenden HOI bestimmt wird, wobei $g^{vor}$ die anfängliche Granularität des unmittelbar vorangegangen HOI angibt, und wo die anfänglich geplante Länge des HOI nach

$$HOI = N^{pl} \cdot g^d$$

bestimmt wird, und wobei Umweltparameter der lokalen Uhr während des **HOI** periodisch gemessen werden, und bei einer Änderung eines Umweltparameters bezogen auf den Beginn des **HOI** eine Änderung der Driftrate $DR^{\Delta}$ unter Verwendung der entsprechenden Drift-Raten-Änderungsfunktion **DRAF** bestimmt wird und nach

$$g = g^d (1 + DR^{\Delta})$$

eine aktuelle Granularität g der lokalen Uhr ermittelt wird, und wobei mittels

$$\mathrm{HOI^{akt} = min\{\, HOI\,,\, [\, O^{max}\,/\,(\,|\,DR^{\Delta}\,|\,)\,]\,,\ HOI^{st}\}}$$

die aktualisierte Länge des laufenden HOI bestimmt wird, wo **HOI**<sup>st</sup> die Länge des **HOI** angibt, die sich aus der stochastischen Driftrate ergibt, und wo am Ende des laufenden **HOI** ein neuer Zyklus begonnen wird.

Vorteilhafte Ausgestaltungen des erfindungsgemäßen Verfahrens und des erfindungsgemäßen verteilten Echtzeitsystems, die alleine oder in einer beliebigen Kombination realisiert sein können, sind im Folgen aufgeführt:

- die Anzahl der Ticks $N^{glo}$ der lokalen Uhr innerhalb eines Ticks der globalen Zeit wird entsprechend $N^{glo} = G^{glo}/g$ bestimmt, wobei $G^{glo}$ Dauer eines globalen Ticks angibt und **g** den aktuellen Wert der Granularität der lokalen Uhr angibt;

- eine Periode **P** zur Messung der Umweltparameter wird entsprechend $P = O^{max}/DR^{wc}$ festgelegt, wobei **DR**<sup>wc</sup> die spezifizierte *worst-case* Driftrate des Oszillators;

- bei Ausfall der Referenzzeitmessung am Ende eines **HOI** wird die periodische Anpassung der Granularität der lokalen Uhr aufgrund geänderter Umweltparameter solange fortgesetzt, bis eine externe Referenzzeitmessung wieder durchgeführt werden kann;

- mit der globalen Zeitbasis wird eine *sparse time Base* aufgebaut;

- nach Ende eines **HOI** werden die aktuelle globale Zeit und/oder die gemessenen Umweltparameter des Oszillator und/oder die verwendeten Granularitäten der lokalen Uhr und/oder die unterschiedlichen Driftraten **DR** während des **HOI** in einer Umweltdatenbank abgelegt;

- die Parameter der Drift-Raten-Änderungsfunktion **DRAF** werden, vorzugsweise durch Auswertung der in der Umweltdatenbank gespeicherten Daten, an den in einem Knotenrechner eingesetzten Oszillator angepasst.

Weiters betrifft die Erfindung eine eingangs erwähnte Vorrichtung zur periodischen Erzeugung einer global synchronisierten Zeitnachricht, wobei die Vorrichtung einen Mikrocomputer mit CPU und Speicher, einen Empfänger für ein externes Referenzzeitsignal, einen Quarz Oszillator, ein Kommunikationsinterface zum Senden von Nachrichten und einen Temperatursensor zur Messung der Temperatur des Quarz Oszillator umfasst, und wobei die Vorrichtung zum Durchführen eines oben beschriebenen Verfahrens zur Realisierung einer globalen Zeitbasis eingerichtet ist.

Vorteilhafte Ausgestaltungen der erfindungsgemäßen Vorrichtung, die allein oder in beliebiger Kombination realisiert sein können, sind im Folgenden beschrieben:

- die Vorrichtung weist zumindest einen Sensor zur Messung des Luftdrucks auf;

- die Vorrichtung weist zumindest einen Sensor zur Messung des Luftfeuchtigkeit auf;

- die Vorrichtung weist zumindest einen Sensor zur Messung der Beschleunigung auf;

- die Vorrichtung weist zumindest einen GPS Empfänger auf;

- die Vorrichtung weist zumindest einen GLONAS Empfänger auf;

- die Vorrichtung weist zumindest einen GALILEO Empfänger auf;

- die Vorrichtung weist zumindest einen Empfänger für ein eLORAN Zeitsignal auf;

- die Vorrichtung weist zumindest einen Empfänger für ein DCF77 Zeitsignal auf;

- die Vorrichtung ist als eine, insbesondere kompakte, Baueinheit ausgebildet;

- der Mikrocomputer ist zur Berechnung eines periodischen Zeitsignals eingerichtet.

Weiters wird das eingangs genannten Problem mit einem verteilten Echtzeitcomputersystem gelöst, welches eine Vielzahl von Knotenrechnern umfasst, wobei jeder Knotenrechner über eine lokale Uhr verfügt und Zugriff auf eine externe Referenzzeit mit der Genauigkeit einer externen Zeitmessung $A^{ref}$ hat, und wobei das verteilte Echtzeitcomputersystem zum Durchführen eines oben genannten Verfahrens zur energiesparenden Realisierung einer globalen Zeitbasis eingerichtet ist.

Vorzugsweise weist das Echtzeitcomputersystem eine oder mehrere oben beschriebene Vorrichtungen auf.

Insbesondere kann vorgesehen sein, dass eine oder mehrere der oben beschriebenen Vorrichtungen nach jeweils in Knoten des Echtzeitcomputersystems angeordnet sind, insbesondere jeweils genau eine Vorrichtung in einem Knoten.

Wenn in einem verteilten Computersystem eine digitale globale Zeit mit einer definierten Granularität vorhanden ist, wobei die *Reasonableness Condition* immer erfüllt ist, dann kann im System eine *sparse time* Basis aufgebaut werden [4, p.64]. Eine sparse time Basis unterscheidet zwischen aktiven und passiven Zeitkörnern und schränkt das Auftreten von Ereignissen auf die aktiven Zeitkörner ein. In einer sparse time Basis werden alle Ereignisse, die innerhalb eines aktiven Zeitkorns auftreten, als gleichzeitig klassifiziert und Ereignisse, die in zwei unterschiedlichen aktiven Zeitkörnen auftreten sind systemweit zeitlich konsistent geordnet. Wenn die Ereignisse von einem Rechnerknoten ausgelöst werden, wie z.B. der Start des Sendens einer Nachricht, so sind in einer sparse time Basis zwischen zwei aktiven Zeitkörnern, die global die gleiche Kennung haben, mindestens drei passive Zeitkörner vorzusehen. Wenn ein externes Ereignis in einem passiven Intervall der sparse time Base auftritt, so ist es mittels eines Agreement Protocols einem aktiven Intervall zuzuordnen [4,p.63]. Die sparse time Base verhindert Inkonsistenzen in der zeitlichen Ordnung von Ereignissen. Inkonsistenzen in der zeitlichen Ordnung können zu sporadischen Fehlern im Gesamtsystem führen.

Die vorliegende Erfindung legt ein Verfahren offen, wie die Uhren der Knotenrechner eines verteilten Echtzeitsystems mit einer externen Zeitreferenz, wie z.B. der GPS Zeit, mit minimalem Energieaufwand synchronisiert werden und wie eine *sparse time-base* aufgebaut werden kann. Aufgrund der Berücksichtigung des Einflusses sich ändernder physikalischer Umweltparameter auf die Schwingungsdauer der lokalen Oszillatoren kann das *Holdover Intervall,* nachdem eine externe Synchronisation stattfinden muss, dynamisch festgelegt werden und die Häufigkeit der energieaufwendigen externen Synchronisationsprozesse erheblich reduziert werden.

Die oben genannten Aufgaben werden durch ein Verfahren mit den Merkmalen des Anspruchs 1, eine Vorrichtung mit den Merkmalen des Anspruchs 8 und ein Echtzeitsystem mit den Merkmalen des Anspruchs 15 gelöst. Vorteilhafte Weiterbildungen der Erfindung sind in den abhängigen Ansprüchen angegeben.

Im Folgenden ist die Erfindung an Hand der Zeichnung näher erörtert. In dieser zeigt

Fig. 1 das Verhalten von Uhren auf einer Zeitachse, und

Fig. 2 ein Beispiel einer Drift-Raten-Änderungs-Funktion (DRAF) bei einer Änderung der Temperatur.

Eine mögliche Realisierung der Erfindung wird anhand der vorab angeführten Zeichnung genau erklärt. Dabei werden die in der folgenden Tabelle 1 angeführten Abkürzungen verwendet.

**Tabelle 1:** Verwendete Abkürzungen

| Symbol | Dim | Erklärung |
|---|---|---|
| $A^{ref}$ | [sec] | Genauigkeitsfehler (Accuracy) der externen Zeitmessung |
| DR | keine | Driftrate des Oszillators |
| DRAF | keine | Driftratenänderungsfunktion |
| $DR^{next}$ | keine | Driftrate des Oszillators im nächsten HOI |
| $DR^{st}$ | keine | stochastische Driftrate des Oszillators |
| $DR^{wc}$ | keine | *worst-case* Driftrate des Oszillators entsprechend der Spezifikation |
| $DR^{\Delta}$ | keine | Änderung der Driftrate aufgrund von Umweltparameteränderung |
| $f^s$ | keine | Sicherheitsfaktor der geforderte Granularität der globalen Zeitbasis |
| g | [sec] | Granularität der lokalen Uhr |
| $g^{akt}$ | [sec] | aktuelle Granularität der lokalen Uhr |
| $g^d$ | [sec] | *durchschnittliche Granularität* der lokalen Uhr im unmittelbar vergangen HOI |
| $G^{glo}$ | [sec] | geforderte Granularität der globalen Zeitbasis, globales Zeitkorn |

(fortgesetzt)

| Symbol | Dim | Erklärung |
|---|---|---|
| $g^{spec}$ | [sec] | spezifizierte Granularität der lokalen Uhr |
| $g^{vor}$ | [sec] | anfängliche Granularität der lokalen Uhr |
| HOI | [sec] | Holdover Intervall |
| $HOI^{akt}$ | [sec] | Aktuelles Holdover Intervall |
| $HOI^{st}$ | [sec] | Längstes Holdover Intervall aufgrund der stochastischen Driftrate |
| $N^{gez}$ | keine | gezählte Anzahl der Ticks im unmittelbar vergangen HOI |
| $N^{glo}$ | keine | Anzahl der Ticks der lokalen Uhr in einem globalen Zeitkorn $G^{glo}$ |
| $N^{pl}$ | keine | Anzahl der geplanten Ticks $N^{pl}$ der lokalen Uhr im HOI |
| $O^{max}$ | [sec] | maximales Offset der globalen Zeit am Ende des HOI |
| P | [sec] | Periode P zur Messung der Umweltparameter einer lokalen Uhr |
| $t^B$ | [sec] | Zeitpunkt des Beginns des HOI, gemessen mit der externen Zeitreferenz |
| $t^E$ | [sec] | Zeitpunkt des Endes des HOI, gemessen mit der externen Zeitreferenz |

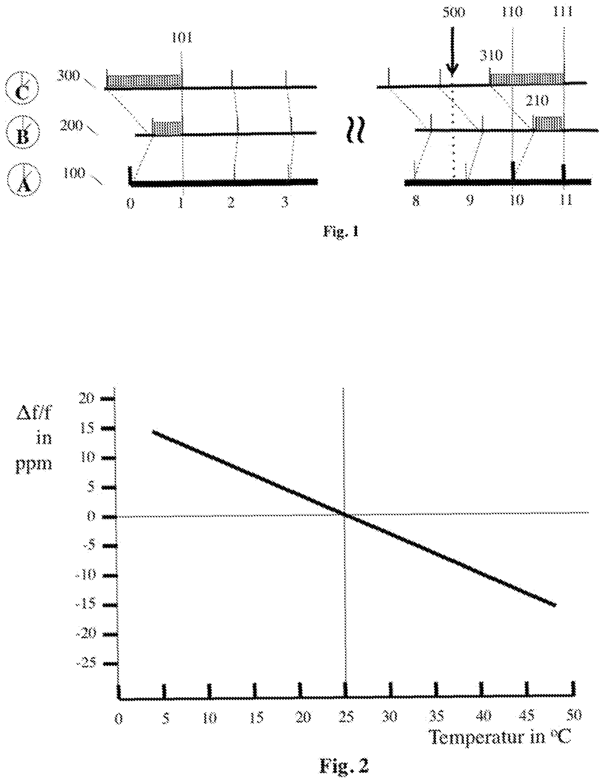

Auf der Zeitachse **100** gemäß Figur 1 ist das Fortschreiten der globalen externen Referenzzeit, wie sie von einem externen Zeitreferenzsystem, z.B. dem GPS System, angeboten wird, von links nach rechts angegeben. Die auf der Abszisse **100** eingezeichneten Ticks 0, 1, 2, 3 ... 8, 9, 10, 11 der Uhr **A** markieren die Ticks der globalen Zeit. Auf der Zeitachse **100** entspricht der Abstand zwischen je zwei aufeinanderfolgenden Ticks, z.B. zwischen dem Tick **1** und dem Tick **2,** exakt der geforderten *globalen Granularität $G^{glo}$* der globalen Zeit, ausgedrückt in Sekunden. Diese globale Granularität kann mit einer sehr genauen Referenzuhr, z.B. einer Atomuhr, erfasst werden.

Die Erfassung der Länge eines Intervalls mit einer digitalen Referenzuhr mit der Granularität **g** erfordert, dass der Zeitstempel des Beginn-Zeitpunkts $t^B$ des Intervalls und der Zeitstempel des End-zeitpunkts $t^E$ des Intervalls gebildet werden. Unter einem Zeitstempel eines Ereignisses versteht man den Stand der Referenzuhr bei dem oder unmittelbar nach dem Auftreten des Ereignisses. Die Länge des Intervalls ergibt sich dann zu $(t^E - t^B) \pm g$. Wenn der Beginnzeitpunkt und der Endzeitpunkt von unterschiedlichen Uhren eines global synchronisierten Ensembles erfasst werden, wobei die Plausibilitätsbedingung eingehalten wird, dann ergibt sich die Länge des Intervalls $(t^E - t^B) \pm 2g$ [siehe 4, p. 61-62].

Bei der lokalen Sicht der globalen Ticks 0 und 10 synchronisieren sich die lokalen Uhren **B** und **C** des Ensembles auf die externe Referenzzeit der Uhr A derart, dass sie bei Tick 1 **101** und bei Tick 11 **111** wieder mit der Referenzzeit synchronisiert sind.

Fig.1 zeigt die Folge der globalen Ticks von drei Uhren, die Referenzuhr **A** auf der Zeitachse 100, die lokale Uhr **B** auf der Zeitachse **200** und die lokale Uhr **C** auf der Zeitachse **300**.

In einem realen physikalischen System kann zwischen den Synchronisationsereignissen, z.B. zum externen Referenzzeitpunkt **101** bzw. **111** auf den Zeitachsen **200** und **300** ein Fehler von kleiner als $A^{ref}$ Sekunden, der *Genauigkeitsfehler* der externen Zeitmessung, auftreten. Dieser Genauigkeitsfehler $A^{ref}$ ergibt sich unter anderem aus den unterschiedlichen Laufzeiten und Verarbeitungszeiten der Zeitsignale der Referenzzeit und ist im Datenblatt des Zeitempfängers angegeben. Bei einem typischen GPS Empfänger ist der *Genauigkeitsfehler* $A^{ref}$ der externen Zeitmessung kleiner als 100 nsec. In Fig. 1 ist dieser *Genauigkeitsfehler* $A^{ref}$ nicht dargestellt.

In Fig. 1 wird angenommen, dass sich die Uhr **B** und die Uhr C nach 10 globalen Ticks wieder auf die externe Zeit synchronisieren. Zwischen dem globalen Tick **1** und dem globalen Tick **10** der Fig. 1 sind die beiden lokalen Uhren **B und C** *frei laufend,* d.h. sie zählen autonom die Anzahl der Schwingungen ihrer lokalen physikalischen Schwingkreise.

Ein externes Ereignis, z.B. das Ereignis **500** in Fig. 1, bekommt von der Uhr **A** den Zeitstempel **8**, von der Uhr **B** den Zeitstempel **8**, aber von der Uhr C den Zeitstempel **9**. Wenn das Auftreten von externen Ereignissen nicht eingeschränkt wird, kann diese Inkonsistenz prinzipiell nicht vermieden werden. Die Einführung einer *sparse time,* die das Auftreten von externen Ereignissen auf die aktiven Intervalle der *sparse time* beschränkt, löst das Problem der zeitlichen Inkonsistenz (siehe die ausführliche Behandlung der sparse time in [4, p. 58-65]).

Auf der Zeitachse **200** ist das Verhalten der lokalen Uhr **B** angegeben. Die Uhr leitet ihre Zeitwahrnehmung von den Schwingungen ihres lokalen Quarz Oszillators ab. Die Ticks auf der Zeitachse **200** 0, 1,2,3 ... 8, 9, 10, 11 markieren die globalen Ticks aus der Sicht dieser lokalen Uhr. Die Dauer einer Schwingung des lokalen Quarz Oszillators bezeichnet man als die lokale Granularität **g** des Oszillators. Da die Dauer einer Schwingung des Oszillators der Uhr B etwas länger ist als spezifiziert, wird die Uhr **B** den Synchronisationspunkt **210** später erreichen als die externe Referenzuhr **A**, die schon zum Zeitpunkt **110** ihren zehnten Tick erreicht hat. Zum Zeitpunkt **210** liest die Uhr B die globale Zeit der externen Referenzuhr und stellt fest, dass sie sich schon im Zeitkorn <**10**,**11**> befindet. Sie wird das lokale Zeitkorn <**10**,**11**> auf die Länge <**210**,**111**> verkürzen, so dass sie bei Tick **11** mit dem Tick **11** der Referenzuhr A synchronisiert ist.

Analog ist auf der Zeitachse **300** das Verhalten der lokalen Uhr **C** angegeben. Die Ticks 0, 1, 2, 3 ... 8, 9, 10, 11 auf der Zeitachse **300** markieren die globalen Ticks dieser lokalen Uhr **C**. Da die Dauer einer Schwingung des Oszillators der Uhr **C** etwas kürzer ist als spezifiziert, wird die Uhr **C** ihren Synchronisationspunkt **310** früher erreichen als die externe Referenzuhr **A**, die erst zum Zeitpunkt **110** ihren zehnten Tick erreichen wird. Zum Zeitpunkt **310** liest die Uhr C die globale Zeit der externen Referenzuhr und stellt fest, dass sie sich noch im Zeitkorn <**9**,**11**> der Referenzuhr befindet. Sie wird das lokale Zeitkorn <**10**,**11**> auf die Länge <**310**,**111**> verlängern, so dass sie bei Tick **11** mit dem Tick **11** der Referenzuhr A synchronisiert ist.

Im Folgenden werden die Synchronisation der Uhr B und die dynamische Festlegung der **HOIs** (*Holdoverintervalle*) genau beschrieben. Da sich bei der externen Synchronisation die Uhr jedes Knotenrechners unabhängig von der Uhr jedes anderen Knotenrechners auf die globale externe Referenzzeit, dargestellt auf der Zeitachse **100**, synchronisiert, wird die hier beschriebene Vorgangsweise des Rechnerknotens B von alle anderen Rechnerknoten des Ensembles, also auch vom Rechnerknoten C, durchgeführt.

Die Uhr **B** muss erneut die externe Referenzzeit der Uhr A übernehmen, ehe sie sich um mehr als das *maximale Offset $O^{max}$*

$$O^{max} = (f^s \cdot G^{glo}/2 - A^{ref} - 2\ g^{spec})$$

Sekunden von dem entsprechenden Tick der Uhr **A** entfernt hat. Der Faktor **$f^s$** ist ein Sicherheitsfaktor, der zwischen *0.5* und 1 liegt, typischerweise wird er auf *0.8* gesetzt. Der Term **$2\ g^{spec}$**, die spezifizierte Granularität der Uhr **B**, berücksichtigt den Digitalisierungsfehler bei der Zeitmessung [4, p.61] der externen Referenzzeit.

In dem Beispiel wird angenommen, dass die Uhr **B** als Schwingkreis einen *Quarz Oszillator* enthält [5]. Die Dauer einer Schwingung des Quarz Oszillators wird primär durch die mechanischen Dimensionen des Quarz Kristalls und sekundär durch die physikalischen Umweltbedingungen des Kristalls, wie Temperatur, Luftdruck, Luftfeuchtigkeit, Beschleunigung, elektrische Erregerspannung u.a. bestimmt [6]. Aus dem Datenblatt eines Quarz Oszillators können die spezifizierte Granularität der lokalen Uhr **$g^{spec}$**, d.i die nominale Dauer einer Schwingung, und die Abweichungen dieser Granularität, ausgedrückt in der *worst-case* Driftrate **$DR^{wc}$** des Oszillators innerhalb des vorgesehenen Einsatzbereichs entnommen werden. Typische Werte für **$DR^{wc}$** liegen zwischen $10^{-3}$ und $10^{-8}$ Sekunden/Sekunde.

In der Initialisierungsphase, unmittelbar nach dem Einschalten der Uhrensynchronisation, wird der Beginnzeitpunkt **$t^B$** des ersten HOI mit der externen Referenzzeit zeitgestempelt und die Länge des ersten HOI unter Verwendung der spezifizierten *worst-case Driftrate $DR^{wc}$* der lokalen Uhr nach

$$HOI = O^{max} / DR^{wc}$$

errechnet. In Fig. 1 wird die Länge des HOI durch das Intervall zwischen dem Tick 1 und dem Tick 11 der externen Referenzzeit A auf der Zeitachse 100 dargestellt.

Anschließend wird nach

$$N^{pl} = HOI / g^{spec}$$

die Anzahl der geplanten Ticks **$N^{pl}$** der lokalen Uhr im ersten **HOI** ermittelt. Als anfängliche Granularität **$g^{vor}$**

$$g^{vor} = g^{spec}$$

im ersten **HOI** wird die im Datenblatt spezifizierte Granularität **$g^{spec}$** der lokalen Uhr angenommen. Damit ist die Initialisierung abgeschlossen.

Die folgenden Aktionen zur dynamischen Berechnung der weiteren **HOIs** werden zyklisch durchlaufen.

Am Ende eines **HOI** wird der Endzeitpunkt **$t^E$** des soeben abgelaufenen **HOI** mit der externen Zeit auf der Achse **100** der Fig. 1 zeitgestempelt. Der Endzeitpunkt **$t^E$** eines **HOI** ist gleichzeitig der Beginnzeitpunkt **$t^B$** des folgenden HOI. Während des **HOI** wird die Anzahl der Ticks **$N^{gez}$** der lokalen Uhr gezählt. Nach Ende eines **HOI** wird mittels

$$g^d = (t^E - t^B) / N^{gez}$$

die *durchschnittliche Granularität* $g^d$ der lokalen Uhr im unmittelbar vergangen HOI bestimmt, wobei $N^{gez}$ die gezählte Anzahl der Ticks im unmittelbar vergangen HOI angibt. Diese durchschnittliche Granularität $g^d$ des unmittelbar vergangen HOIs wird als anfängliche Granularität des laufenden HOI gesetzt. Mittels

$$N^{pl} = O^{max} / (g^d - g^{vor})$$

wird die Anzahl der anfänglich geplanten Ticks $N^{pl}$ der lokalen Uhr im laufenden HOI bestimmt, wobei $g^{vor}$ die anfängliche Granularität des unmittelbar vorangegangen HOI angibt und wo $g^d$ die durchschnittliche gemessene Granularität des unmittelbar vergangen HOI angibt. Die *anfänglich geplante Länge des laufenden HOI* wird nach

$$HOI = N^{pl} \cdot g^d$$

bestimmt.

Die Granularität **g** der lokalen Uhr **B** kann sich während des HOI aufgrund einer Änderung eines Umweltparameters, wie Temperatur, Luftdruck, Luftfeuchtigkeit, Beschleunigung u.a. ändern. Da die Umweltparameter mit kostengünstigen MEMS ("Micro-electro-mechanical system") Sensoren periodisch erfasst werden können, wird erfindungsgemäß die Granularität der lokalen Uhr **B** periodisch an die geänderten Umweltparameter angepasst.

Die Umweltparameter der lokalen Uhr, wie z.B. Temperatur, Luftdruck, Luftfeuchtigkeit und/oder Beschleunigung werden während des laufenden **HOI** periodisch gemessen. Die Periode **P** zur Messung der Umweltparameter wird nach

$$P = O^{max} / DR^{wc}$$

festgelegt, wobei $DR^{wc}$ die spezifizierte *worst-case* Driftrate des Oszillators darstellt.

Wird eine Änderung eines Umweltparameters bezogen auf den Wert zu Beginn des **HOI** festgestellt, so wird unter Verwendung der entsprechenden Driftratenänderungsfunktion **DRAF** (siehe Fig. 2) die Änderung der Driftrate $DR^\Delta$, bezogen auf den Beginn des HOI bestimmt.

Die *Driftratenänderungsfunktion DRAF* gibt die Abhängigkeit der Driftratenänderung von einer Änderung eines Umweltparameters ab. Vorzugsweise ist für jeden gemessenen Umweltparameter eine *Driftratenänderungsfunktion DRAF* bekannt. Ein Beispiel für eine DRAF ist in Fig. 2 dargestellt. In Fig. 2 gilt die spezifizierte Granularität der lokalen Uhr $g^{spec}$ bei 25° C. Wenn die Umgebungstemperatur von 25° C auf 40° C steigt, ist entsprechend der **DRAF** von Fig. 2 die relative Frequenzänderung $-10.10^{-6}$ sec/sec und die relative Schwingungsdaueränderung $+10.10^{-6}$ sec/sec. Die Temperaturabhängigkeit eines Quarz Oszillators ist sehr stark von der Lage der kristallographischen Achse im Oszillator abhängig [5, p.13]. Verglichen mit der Temperatur haben die anderen Umweltparameter, wie Luftdruck, Luftfeuchtigkeit, Beschleunigung etc. einen geringeren Einfluss auf die Driftrate [6]. Die Driftratenänderungsfunktionen **DRAF** des verwendeten Quarz Oszillators müssen entweder aus der Literatur (z.B. [5,6]) übernommen oder experimentell ermittelt werden.

$$\text{Mittels } g = g^d (1 + DR^\Delta)$$

errechnet sich eine neue aktuelle Granularität g der lokalen Uhr aus der *durchschnittlichen Granularität* $g^d$ der lokalen Uhr im unmittelbar vergangen HOI und der Driftratenänderung $DR^\Delta$.

Bei einer Änderung einer Driftrate $DR^\Delta$ wird auch der Wert des laufenden $HOI^{akt}$ nach

$$HOI^{akt} = \min\{ HOI, [ O^{max} / (|DR^\Delta|], HOI^{st}\}$$

neu bestimmt. Der Term $HOI^{st}$ gibt die maximale Länge des **HOI** an, die sich von der stochastischen Driftrate $DR^{st}$ nach $HOI^{st} = O^{max}/DR^{st}$

ableitet. Der konkrete Wert der stochastischen Driftrate hängt von der Genauigkeit und der Häufigkeit der Messung der Umweltparameter ab [6] und ist im Rahmen der Systemanalyse festzulegen. Der Wertebereich von $DR^{st}$ liegt zwischen $10^{-5}$ und $10^{-12}$. Im folgenden Beispiel (Tab. 2) wird ein Wert von $10^{-6}$ angenommen.

Wann immer sich die Granularität g der lokalen Uhr ändert, muss entsprechend

$$N^{glo} = G^{glo}/g$$

die Anzahl der Ticks der lokalen Uhr im globalen Zeitkorn $G^{glo}$ neu bestimmt werden.

Während des Betriebs des Knotenrechners B wird die erfasste funktionale Abhängigkeit zwischen den im Betrieb beobachteten Umweltparametern und der Driftrate in einer Umweltdatenbank gespeichert. Die Auswertung dieser Umweltdatenbank mit Verfahren der *Big Data Analytics* führt zu einer Anpassung der *Driftratenänderungsfunktionen DRAF* an den im Knotenrechner B eingesetzten Quarz Oszillator.

Als externe Zeitreferenz können eine oder mehrere der folgenden Zeitsignalquellen dienen:

- Das GPS Signal
- Das Glonass Signal
- Das Galileo Signal
- Das Langwellenzeitsignal DCF77
- Das Langwellenzeitsignal e-LORAN

Das beschriebene Synchronisationsverfahren lässt sich mit einer Vorrichtung realisieren, die einen Mikrocomputer mit CPU und Speicher, einen Empfänger für ein externes Referenzzeitsignal, einen Quarz Oszillator, ein Kommunikationsinterface zum drahtlosen Senden von Nachrichten und Umweltsensoren zur Messung der Umgebungsbedingungen des Quarz Oszillator umfasst. Als Umweltsensoren können ein Sensor zur Erfassung der Temperatur und/oder ein Sensor zur Messung des Luftdrucks und/oder ein Sensor zur Messung der Luftfeuchtigkeit und/oder ein Sensor zur Messung der Beschleunigung in der Vorrichtung enthalten sein.

Eine solche Vorrichtung kann als kompakte *PTP Grandmaster Clock* entsprechend dem IEEE 1588 Uhren -Synchronisation Standard eingesetzt werden. Die Vorrichtung kann auch Empfänger für mehrere der oben genannten externen Referenzzeitsignale enthalten um den Ausfall eines Signals tolerieren zu können.

In der Tabelle 2 wird an einem konkreten Beispiel gezeigt, wie sich das Holdoverintervall HOI während des Betriebs eines Rechnerknotens ändern kann.

Das Beispiel zeigt, dass der Abstand zwischen zwei Synchronisationszeitpunkten durch die dynamische Festlegung der HOIs (vgl. Zeilen 9 und 20) wesentlich erhöht wird und in der Folge die Anzahl der Synchronisationsereignisse und der damit verbundene Energieaufwand für die Synchronisation signifikant reduziert werden. Die Änderung der Umgebungstemperatur der lokalen Uhr von 25°C auf 40°C führt zu einer so wesentlichen Änderung der Driftrate der lokalen Zeit, dass das HOI verkürzt werden muss.

**Tab. 2:** Beispiel zur Berechnung des HOI

|  | Abk | Datenquelle | Beispiel |
|---|---|---|---|
| 1 | $G^{glo}$ | Systemspezifikation | 100 μsec |
| 2 | $f^s$ | Sicherheits annahme | 0.8 |
| 3 | $A^{ref}$ | GPS Empfänger | 50 nsec |
| 4 | $g^{spec}$ | $g^{spec}$ vom Oszillator Datenblatt | 0.1 μsec |
| 5 | $g^{vor}$ | $g^{spec}$ | 0.1 μsec |
| 6 | $|DR^{wc}|$ | Oszillator Datenblatt | 0.0005 |
| 7 | $|DR^{st}|$ | Messung der Umwelparameter | 0.000001 |
| 8 | $O^{max}$ | $(f^s \cdot G^{glo}/2 - A^{ref} - 2 g^{spec})$ | 39.750 μsec |
| 9 | HOI | $O^{max}/DR^{wc}$ | 79 500 μsec |
| 10 | $N^{pl}$ | HOI/ $g^{spec}$ | 795000 |
| 11 | $t^E - t^B$ | Referenzzeitmessung | 79508 μsec |
| 12 | $N^{gez}$ | Messung | 795002 |

(fortgesetzt)

| | | Abk | Datenquelle | Beispiel |
|---|---|---|---|---|
| | 13 | $g^d$ | $(t^E - t^B)/N^{gez}$ | 0.100009811 $\mu$sec |
| | 14 | $N^{pl}$ | $O^{max}/(g^d - g^{vor})$ | 4051 575 |
| | 15 | HOI | $N^{pl} \cdot g^d$ | 405197 $\mu$sec |
| | 16 | $t^E - t^B$ | Referenzzeitmessung | 405194 $\mu$sec |
| | 17 | $N^{gez}$ | Messung | 4051574 |
| | 18 | $g^d$ | $(t^E - t^B)/N^{gez}$ | 0.100009034 $\mu$sec |
| | 19 | $N^{pl}$ | $O^{max}/(g^d - g^{vor})$ | 51 125 402 |
| | 20 | HOI | $N^{pl} \cdot g^d$ | 5 113 018 $\mu$sec |
| | 21 | $DR^{\Delta}$ | Temperaturmessung 40°C | 0,00001 |
| | 22 | P | $O^{max}/ DR^{wc}$ | 79 500 $\mu$sec |
| | 23 | | $g^d (1 + DR^{\Delta})$ | 0.1000105 $\mu$sec |
| | 24 | $HOI^{st}$ | $[O^{max}/ (|DR^{st}|]$ | 39 7500 000 $\mu$sec |
| | 25 | $HOI^{akt}$ | $min\{HOI, [O^{max}/(|DR^{\Delta}|], HOI^{st}\}$ | 3 975 000 $\mu$sec |

**Zitierte Literatur:**

[1] US 5,864,315

[2] US 7,535,417 B2

[3] US 2012/0146850 A1

[4] Kopetz, H. Real-Time Systems, Design Principles for Distributed Embedded Applications. Springer Verlag. 2011.

[5] Shmaliy, Y. et al. Efficient Predictive Estimator for Holdover in GPS-based clock sychronization. IEEE Trans. on Ultrasonics, Ferroelectrics and Frequency Control. Vol 55. No. 10. pp.2131-2139. 2008.

[5] Vig, J.R. Introduction to Quartz Frequency Standards. Report SLCET-TR-92-1 US Army Laboratory Command Fort Monmouth, N.J. USA

[6] Walls, F.L. Fundamental Limits on the Frequency Stability of Quartz Oscillator. IEEE Trans. on Ultrasonics, Ferroelectrics and Frequency Control. Vol 42. No. 4. pp.576-589. 1995.

**Patentansprüche**

1. Verfahren zur energiesparenden Realisierung einer globalen Zeitbasis in einem verteilten Echtzeitcomputersystem, welches eine Vielzahl von Knotenrechnern umfasst, wobei jeder Knotenrechner über eine lokale Uhr verfügt und Zugriff auf eine externe Referenzzeit mit einem Genauigkeitsfehler $A^{ref}$ einer externen Zeitmessung hat,
**wobei**
ausgehend von einer geforderten Granularität $G^{glo}$ einer globalen Zeitbasis und einer gegebenen spezifizierten Granularität $g^{spec}$ einer lokalen Uhr eines Knotenrechners ein maximales Offsetintervall $O^{max}$ eines Ticks der lokalen Uhr des Knotenrechners bezogen auf einen entsprechenden Tick der globalen Zeit zum Endzeitpunkt eines *Holdoverintervalls* HOI nach

$$O^{max} = (f^s \cdot G^{glo}/2 - A^{ref} - 2\,g^{spec})$$

bestimmt wird, wobei $f^s$ ein Sicherheitsfaktor ist, und wobei anschließend in einer Initialisierungsphase mit einer spezifizierten worst-case Driftrate $DR^{wc}$ nach

$$HOI = O^{max}/DR^{wc}$$

ein erstes HOI mit

$$N^{pl} = HOI/g^{spec}$$

einer Anzahl geplanter Ticks $N^{pl}$ der lokalen Uhr und mit einer anfänglichen Granularität

$$g^{vor} = g^{spec}$$

im ersten HOI festgelegt wird, und wobei ein Beginnzeitpunkt $t^B$ des ersten HOI auf einer externen Zeitbasis gemessen wird, und wobei anschließend zyklisch am Ende eines **HOI** ein Endzeitpunkt $t^E$ eines soeben abgelaufenen **HOI** auf der externen Zeitbasis gemessen wird, wobei der Endzeitpunkt $t^E$ eines **HOI** gleichzeitig einen Beginnzeitpunkt $t^B$ eines folgenden HOI darstellt, und wo während des **HOI** die Anzahl der Ticks $N^{gez}$ der lokalen Uhr gezählt wird, und wobei nach Ende eines **HOI** nach

$$g^d = (t^E - t^B)/N^{gez}$$

eine *durchschnittliche Granularität* $g^d$ der lokalen Uhr im unmittelbar vergangen HOI bestimmt wird, wobei $N^{gez}$ die gezählte Anzahl der Ticks im unmittelbar vergangen HOI angibt, und wobei diese durchschnittliche Granularität als anfängliche Granularität des laufenden HOI gesetzt wird, und wobei nach

$$N^{pl} = O^{max}/(g^d - g^{vor})$$

die Anzahl der anfänglich geplanten Ticks $N^{pl}$ der lokalen Uhr im laufenden HOI bestimmt wird, wobei $g^{vor}$ die anfängliche Granularität des unmittelbar vorangegangen HOI angibt, und wo eine anfänglich geplante Länge des HOI nach

$$HOI = N^{pl} \cdot g^d$$

bestimmt wird, und wobei Umweltparameter der lokalen Uhr während des **HOI** periodisch gemessen werden, und bei einer Änderung eines Umweltparameters bezogen auf den Beginn des **HOI** eine Änderung der Driftrate $DR^\Delta$ unter Verwendung einer entsprechenden Drift-Raten-Änderungsfunktion **DRAF** bestimmt wird und nach

$$g = g^d (1 + DR^\Delta)$$

eine aktuelle Granularität $g$ der lokalen Uhr ermittelt wird, und wobei mittels

$$HOI^{akt} = \min\{ HOI, [\, O^{max}/(|DR^\Delta|\,], HOI^{st}\}$$

eine aktualisierte Länge des laufenden HOI bestimmt wird, wo $HOI^{st}$ eine Länge des **HOI** angibt, die sich aus einer stochastischen Driftrate ergibt, und wo am Ende des laufenden **HOI** ein neuer Zyklus begonnen wird.

2. Verfahren nach Anspruch 1, wobei die Anzahl der Ticks $N^{glo}$ der lokalen Uhr innerhalbe eines Ticks der globalen Zeit entsprechend

$$N^{glo} = G^{glo}/ g$$

bestimmt wird, wobei $G^{glo}$ Dauer eines globalen Ticks angibt und **g** einen aktuellen Wert der Granularität der lokalen Uhr angibt.

3. Verfahren nach Anspruch 1 oder 2, wobei eine Periode P zur Messung der Umweltparameter entsprechend

$$P = O^{max}/ DR^{wc}$$

festgelegt wird, wobei $DR^{wc}$ die spezifizierte *worst-case* Driftrate des Oszillators darstellt.

4. Verfahren nach einem der Ansprüche 1 bis 3, wobei bei Ausfall der Referenzzeitmessung am Ende eines **HOI** die periodische Anpassung der Granularität der lokalen Uhr aufgrund geänderter Umweltparameter solange fortgesetzt wird, bis eine externe Referenzzeitmessung wieder durchgeführt werden kann.

5. Verfahren nach einem der Ansprüche 1 bis 4, wobei mit der globalen Zeitbasis eine *sparse time Base* aufgebaut wird.

6. Verfahren nach einem der Ansprüche 1 bis 5, wobei nach Ende eines **HOI** die aktuelle globale Zeit und/oder die gemessenen Umweltparameter des Oszillator und/oder die verwendeten Granularitäten der lokalen Uhr und/oder die unterschiedlichen Driftraten **DR** während des **HOI** in einer Umweltdatenbank abgelegt werden.

7. Verfahren nach einem der Ansprüche 1 bis 6, wobei Parameter der Drift-Raten-Änderungsfunktion **DRAF,** vorzugsweise durch Auswertung von in einer Umweltdatenbank gespeicherten Daten, an einen in einem Knotenrechner eingesetzten Oszillator angepasst werden.

8. Vorrichtung zur periodischen Erzeugung einer global synchronisierten Zeitnachricht, wobei die Vorrichtung einen Mikrocomputer mit CPU und Speicher, einen Empfänger für ein externes Referenzzeitsignal, einen Quarz Oszillator, ein Kommunikationsinterface zum Senden von Nachrichten und einen Temperatursensor zur Messung der Temperatur des Quarz Oszillator umfasst, und wobei die Vorrichtung das zum Durchführen eines Verfahrens nach einem der Ansprüche 1 bis 7 zur Realisierung einer globalen Zeitbasis eingerichtet ist.

9. Vorrichtung nach Anspruch 8, wobei sie zumindest einen Sensor zur Messung des Luftdrucks aufweist.

10. Vorrichtung nach Anspruch 8 oder 9, wobei sie zumindest einen Sensor zur Messung des Luftfeuchtigkeit aufweist.

11. Vorrichtung nach einem der Ansprüche 8 bis 10, wobei sie zumindest einen Sensor zur Messung der Beschleunigung aufweist.

12. Vorrichtung nach einem der Ansprüche 8 bis 11, wobei sie zumindest einen GPS Empfänger aufweist, und/oder sie zumindest einen GLONAS Empfänger aufweist, und/oder sie zumindest einen GALILEO Empfänger aufweist, und/oder sie zumindest einen Empfänger für ein eLORAN Zeitsignal aufweist, und/oder sie zumindest einen Empfänger für ein DCF77 Zeitsignal aufweist.

13. Vorrichtung nach einem der Ansprüche 8 bis 12, wobei sie als eine Baueinheit ausgebildet ist.

14. Vorrichtung nach einem der Ansprüche 8 bis 13, wobei der Mikrocomputer zur Berechnung eines periodischen Zeitsignals eingerichtet ist.

15. Verteiltes Echtzeitcomputersystem, welches eine Vielzahl von Knotenrechnern umfasst, wobei jeder Knotenrechner über eine lokale Uhr verfügt und Zugriff auf eine externe Referenzzeit mit einem Genauigkeitsfehler **A**^ref einer externen Zeitmessung hat, wobei das verteilte Echtzeitcomputersystem zum Durchführen eines Verfahrens nach einem der Ansprüche 1 bis 7 zur energiesparenden Realisierung einer globalen Zeitbasis eingerichtet ist.

**16.** Echtzeitcomputersystem nach Anspruch 15, wobei das Echtzeitcomputersystem eine oder mehrere Vorrichtungen nach einem der Ansprüche 8 bis 14 aufweist, wobei vorzugsweise eine oder mehrere Vorrichtungen nach einem der Ansprüche 8 bis 14 jeweils in Knoten des Echtzeitcomputersystems angeordnet sind.

**Claims**

**1.** A method for energy-conserving implementation of a global time base in a distributed real-time computer system comprising a plurality of node computers, wherein each node computer has a local clock and has access to an external reference time with an accuracy error $A^{ref}$ of an external time measurement,
wherein
starting from a required granularity $G^{glo}$ of a global time base and a given specified granularity $g^{spec}$ of a local clock of a node computer, a maximum offset interval $O^{max}$ of a tick of the local clock of the node computer with respect to a corresponding tick of the global time to the end time point of a *holdover interval* HOI is determined according to

$$O^{max}=(f^s \cdot G^{glo}/2 - A^{ref} - 2g^{spec})$$

wherein $f^s$ is a safety factor, and wherein subsequently in an initialization phase with a specified worst-case drift rate $DR^{wc}$ according to

$$HOI = O^{max}/DR^{wc}$$

a first HOI with

$$N^{pl} = HOI/g^{spec}$$

a number of planned ticks $N^{pl}$ of the local clock and with an initial granularity

$$g^{vor} = g^{spec}$$

in the first HOI is determined, and wherein the start time point $t^B$ of the first HOI on an external time base is measured, and wherein subsequently cyclically at the end of an HOI, an end time point $t^E$ of a just-elapsed HOI on the external time base is measured, wherein the end time point $t^E$ of an HOI simultaneously represents a start time point $t^B$ of the following HOI, and where, during the HOI, the number of the ticks $N^{gez}$ of the local clock is counted, and wherein, after the end of an HOI, a *mean granularity* $g^d$ of the local clock in the immediately-prior HOI is determined according to

$$g^d = (t^E - t^B)/N^{gez}$$

wherein $N^{gez}$ specifies the counted number of the ticks in the immediately-prior HOI, and wherein this mean granularity is set as an initial granularity of the current HOI, and wherein the number of the initially planned ticks $N^{pl}$ of the local clock in the current HOI is determined according to

$$N^{pl} = O^{max}/(g^d - g^{vor})$$

wherein $g^{vor}$ specifies the initial granularity of the immediately-prior HOI, and where an initially planned length of the HOI is determined according to

$$HOI = N^{pl} \cdot g^d$$

and wherein environmental parameters of the local clock are periodically measured during the HOI, and - in the event of a change in an environmental parameter relative to the start of the HOI - a change in the drift rate $DR^\Delta$ is determined using a corresponding drift rate change function DRAF and a current granularity g of the local clock is determined according to

$$g = g^d(1 + DR^\Delta)$$

and wherein an updated length of the current HOI is determined by means of

$$HOI^{akt} = \min\{HOI, [O^{max}/(|DR^\Delta|], HOI^{st}\}$$

where $HOI^{st}$ specifies a length of the HOI that arises from a stochastic drift rate, and where a new cycle is started at the end of the current HOI.

2. The method according to claim 1, wherein the number of the ticks $N^{glo}$ of the local clock within one tick of the global time is determined according to

$$N^{glo} = G^{glo}/g$$

wherein $G^{glo}$ specifies the duration of a global tick and g specifies a current value of the granularity of the local clock.

3. The method according to claim 1 or 2, wherein a period P for measuring the environmental parameters is determined according to

$$P = O^{max}/DR^{wc}$$

wherein $DR^{wc}$ represents the specified *worst-case* drift rate of the oscillator.

4. The method according to one of claims 1 to 3, wherein in the event of failure of the reference time measurement at the end of an HOI, the periodic adjustment of the granularity of the local clock is continued due to changed environmental parameters until an external reference time measurement can be performed again.

5. The method according to one of claims 1 to 4, wherein a *sparse time base* is constructed with the global time base.

6. The method according to one of claims 1 to 5, wherein after the end of an HOI, the current global time and/or the measured environmental parameters of the oscillator and/or the used granularities of the local clock and/or the different drift rates DR during the HOI are stored in an environmental database.

7. The method according to one of claims 1 to 6, wherein the parameters of the drift rate change function DRAF are adapted to an oscillator used in a node computer, preferably by assessment of the data stored in an environmental database.

8. A device for periodically generating a globally synchronized time message, wherein the device comprises a microcomputer having a CPU and a storage unit, a receiver for an external reference time signal, a quartz oscillator, a communication interface for sending messages, and a temperature sensor for measuring the temperature of the quartz oscillator, and wherein the device is adapted to carry out a method according to one of claims 1 to 7 for realizing a global time base.

9. The device according to claim 8, wherein this comprises at least one sensor for measuring the air pressure.

10. The device according to claim 8 or 9, wherein this comprises at least one sensor for measuring the air humidity.

11. The device according to one of claims 8 to 10, wherein this comprises at least one sensor for measuring acceleration.

12. The device according to one of claims 8 to 11, wherein this device comprises at least one GPS receiver and/or it comprises at least one GLONAS receiver and/or it comprises at least one GALILEO receiver and/or it comprises at least one receiver for an eLORAN time signal and/or it comprises at least one receiver for a DCF77 time signal.

13. The device according to one of claims 8 to 12, wherein this device is configured as one structural unit.

14. The device according to one of claims 8 to 13, wherein the microcomputer is configured to calculate a periodic time signal.

15. A distributed real-time computer system comprising a plurality of node computers, wherein each node computer has a local clock and has access to an external reference time with an accuracy error $A^{ref}$ of an external time measurement, wherein the distributed real-time computer system is configured to carry out a method according to one of claims 1 to 7 for energy-conserving realization of a global time base.

16. The real-time computer system according to claim 15, wherein the real-time computer system comprises one or more devices according to one of claims 8 to 14, wherein preferably one or more devices according to one of claims 8 to 14 are each arranged in nodes of the real time computer system.

**Revendications**

1. Procédé pour la réalisation économe en énergie d'une base de temps globale dans un système informatique en temps réel réparti, lequel comporte une pluralité d'ordinateurs de noeud, chaque ordinateur de noeud disposant d'une horloge locale et ayant accès à un temps de référence externe avec une erreur de précision $A^{ref}$ d'une mesure de temps externe,

   **dans lequel**

   en partant d'une granularité requise $G^{glo}$ d'une base de temps globale et d'une granularité spécifiée donnée $g^{spec}$ d'une horloge locale d'un ordinateur de noeud, un intervalle de décalage maximal $O^{max}$ d'un tic de l'horloge locale de l'ordinateur de noeud par rapport à un tic correspondant du temps global au point temporel de fin d'un *intervalle de maintien* **HOI** est déterminé conformément à

   $$O^{max} = (f^s \cdot G^{glo}/2 - A^{ref} - 2g^{spec})$$

   où $f^s$ est un facteur de sécurité, et dans lequel, ensuite, dans une phase d'initialisation avec un taux de dérive de pire cas spécifié $DR^{wc}$ conformément à

   $$HOI = O^{max}/DR^{wc}$$

   un premier HOI avec

   $$N^{pl} = HOI/g^{spec}$$

   un nombre de tics planifiés $N^{pl}$ de l'horloge locale et avec une granularité initiale

   $$g^{vor} = g^{spec}$$

   dans le premier HOI est déterminé, et dans lequel un point temporel de début $t^B$ du premier HOI sur une base de temps externe est mesuré, et dans lequel, ensuite, de façon cyclique à la fin d'un **HOI,** un point temporel de fin $t^E$ d'un **HOI** qui vient de s'écouler sur la base de temps externe est mesuré, dans lequel le point temporel de fin $t^E$ d'un **HOI** simultanément représente un point temporel de début $t^B$ d'un HOI suivant, et où, pendant le **HOI**, le nombre des tics $N^{gez}$ de l'horloge locale est compté, et dans lequel, après la fin d'un **HOI**, une *granularité moyenne* $g^d$ de l'horloge locale dans le HOI immédiatement précédent est déterminée conformément à

$$g^d = (t^E - t^B)/N^{gez}$$

où $N^{gez}$ représente le nombre compté des tics dans le HOI immédiatement précédent, et dans lequel cette granularité moyenne est fixée en tant que granularité initiale du HOI courant, et dans lequel le nombre des tics planifiés initialement $N^{pl}$ de l'horloge locale dans le HOI courant est déterminé conformément à

$$N^{pl} = O^{max}/(g^d - g^{vor})$$

où $g^{vor}$ représente la granularité initiale du HOI immédiatement précédent, et où une longueur planifiée initialement du HOI est déterminée conformément à

$$HOI = N^{pl} \cdot g^d$$

et dans lequel des paramètres d'environnement de l'horloge locale sont mesurés périodiquement pendant le **HOI**, et dans le cas d'un changement d'un paramètre d'environnement par rapport au début du **HOI**, un changement du taux de dérive **DR$^{\Delta}$** est déterminé avec utilisation d'une fonction de changement de taux de dérive correspondante **DRAF** et une granularité courante **g** de l'horloge locale est établie conformément à

$$g = g^d(1+DR^{\Delta})$$

et dans lequel une longueur actualisée du HOI courant est déterminée au moyen de

$$HOI^{akt} = \min\{HOI, [O^{max}/|DR^{\Delta}|], HOI^{st}\}$$

où **HOI$^{st}$** représente une longueur du **HOI**, qui résulte d'un taux de dérive stochastique, et où, à la fin du **HOI** courant, un nouveau cycle est commencé.

2. Procédé selon la revendication 1, dans lequel le nombre des tics **N$^{glo}$** de l'horloge locale à l'intérieur d'un tic du temps global est déterminé conformément à

$$N^{glo} = G^{glo}/g$$

où **G$^{glo}$** spécifie la durée d'un tic global et **g** spécifie une valeur courante de la granularité de l'horloge locale.

3. Procédé selon l'une des revendications 1 ou 2, dans lequel une période **P** pour la mesure des paramètres d'environnement est établie conformément à

$$P = O^{max}/DR^{wc}$$

où **DR$^{wc}$** représente le taux de dérive de *pire cas* spécifié de l'oscillateur.

4. Procédé selon l'une des revendications 1 à 3, dans lequel, en cas de défaillance de la mesure de temps de référence à la fin d'un **HOI**, l'ajustement périodique de la granularité de l'horloge locale est poursuivi sur la base d'un changement des paramètres d'environnement jusqu'à ce qu'une mesure de temps de référence externe puisse être réalisée à nouveau.

5. Procédé selon l'une des revendications 1 à 4, dans lequel une *base de temps éparse* est construite avec la base de temps globale.

6. Procédé selon l'une des revendications 1 à 5, dans lequel, après la fin d'un **HOI,** le temps global courant et/ou les paramètres d'environnement mesurés de l'oscillateur et/ou les granularités utilisées de l'horloge locale et/ou les taux de dérive différents **DR** durant le **HOI** sont mémorisés dans une banque de données environnementales.

7. Procédé selon l'une des revendications 1 à 6, dans lequel des paramètres de la fonction de changement de taux de dérive **DRAF** sont adaptés à un oscillateur utilisé dans un ordinateur de noeud, de préférence par évaluation de données enregistrées dans une banque de données environnementales.

8. Dispositif pour la génération périodique d'un message temporel synchronisé globalement, dans lequel le dispositif comporte un microordinateur avec une CPU et une unité de mémorisation, un récepteur pour un signal temporel de référence externe, un oscillateur à quartz, une interface de communication pour l'envoi de messages et un capteur de température pour la mesure de la température de l'oscillateur à quartz, et dans lequel le dispositif est configuré pour la mise en oeuvre d'un procédé selon l'une des revendications 1 à 7 pour la réalisation d'une base de temps globale.

9. Dispositif selon la revendication 8, dans lequel il présente au moins un capteur pour la mesure de la pression d'air.

10. Dispositif selon l'une des revendications 8 ou 9, dans lequel il présente au moins un capteur pour la mesure de l'humidité de l'air.

11. Dispositif selon l'une des revendications 8 à 10, dans lequel il présente au moins un capteur pour la mesure de l'accélération.

12. Dispositif selon l'une des revendications 8 à 11, dans lequel il présente au moins un récepteur GPS, et/ou il présente au moins un récepteur GLONASS, et/ou il présente au moins un récepteur GALILEO, et/ou il présente au moins un récepteur pour un signal temporel eLORAN, et/ou il présente au moins un récepteur pour un signal temporel DCF77.

13. Dispositif selon l'une des revendications 8 à 12, dans lequel il est réalisé en tant qu'unité structurale.

14. Dispositif selon l'une des revendications 8 à 13, dans lequel le microordinateur est conçu pour le calcul d'un signal temporel périodique.

15. Système informatique en temps réel réparti, lequel comporte une pluralité d'ordinateurs de noeud, chaque ordinateur de noeud disposant d'une horloge locale et ayant accès à un temps de référence externe avec une erreur de précision **A^{ref}** d'une mesure de temps externe, le système informatique en temps réel réparti étant conçu pour la mise en oeuvre d'un procédé selon l'une des revendications 1 à 7 pour la réalisation économe en énergie d'une base de temps globale.

16. Système informatique en temps réel selon la revendication 15, dans lequel le système informatique en temps réel présente un ou plusieurs dispositifs selon l'une des revendications 8 à 14, dans lequel, de préférence, un ou plusieurs dispositifs selon l'une des revendications 8 à 14 sont disposés chacun dans des noeuds du système informatique en temps réel.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010177600 A1
- US 5864315 A
- US 7535417B2 A
- US 20120146850 A1


**In der Beschreibung aufgeführte Nicht-Patentliteratur**

- Real-Time Systems. **KOPETZ, H.** Design Principles for Distributed Embedded Applications. Springer Verlag, 2011
- **SHMALIY, Y. et al.** Efficient Predictive Estimator for Holdover in GPS-based clock sychronization. *IEEE Trans. on Ultrasonics, Ferroelectrics and Frequency Control,* 2008, vol. 55, 2131-2139
- **VIG, J.R.** Introduction to Quartz Frequency Standards. *Report SLCET-TR-92-1 US Army Laboratory Command Fort Monmouth*
- **WALLS, F.L.** Fundamental Limits on the Frequency Stability of Quartz Oscillator. *IEEE Trans. on Ultrasonics, Ferroelectrics and Frequency Control,* 1995, vol. 42 (4), 576-589